# EUROPEAN PATENT SPECIFICATION

(11) **EP 0 787 075 B1**
(45) Date of publication and mention of the grant of the patent: **24.05.2000**
(21) Application number: 95936155.1
(22) Date of filing: 19.10.1995
(51) Int. Cl.: B60B 39/00

(54) **ANTISKID DEVICE**
GLEITSCHUTZVORRICHTUNG
DISPOSITIF ANTIPATINAGE

(30) Priority: 19.10.1994 SE 9403585
(43) Date of publication of application: 06.08.1997
(73) Proprietor: VBG PRODUKTER AB, 462 56 Vänersborg (SE)
(72) Inventor: HOLMGREN, Lars, S-462 41 Vänersborg (SE)
(74) Representative: Rostovanyi, Peter
(86) International application number: SE9501226
(87) International publication number: WO9612624

(56) References cited:
- EP-A- 0 016 270
- EP-A- 0 151 098
- EP-A- 0 467 494
- DE-A- 3 509 063

## Description

### Technical Field

The present invention relates to an antiskid device for vehicles and more specifically to a device of the type as stated in the preamble to the accompanying claim 1.

### Description of the Prior Art

Different types of antiskid devices are available on the market, most of which comprise a pivotable arm which, when actuated, presses a rotatable roller against a vehicle wheel (the side of the tyre). The roller is fitted with antiskid elements, usually pieces of chain. When the roller is pressed against the vehicle wheel, it is caused to rotate and throws the antiskid elements outwards by centrifugal force. The antiskid elements will then be thrown in before the vehicle tyre and be pressed in between the vehicle tyre and the ground, whereby the friction between tyre and ground increases. The publication CA-A-1,138,314 discloses such an antiskid device, in which chain pieces suspended from a roller are thrown in before a vehicle wheel when the roller is caused to rotate by frictional engagement with the vehicle wheel.

The publication SE-B-466,539 discloses a further antiskid device, in which chain pieces carried by radial fingers of a rotatable member are thrown in between the wheel of a vehicle and the ground in the working position. In this special type of device, rotational drive does not occur by engagement with the tyre side, but the rotatable member is in this case driven only by the friction between tyre and ground. The invention is also applicable to antiskid-element-carrying, rotatable members of this type.

In devices of the above-mentioned type, the antiskid elements are caused to act between the tyre and the ground in that part of the cycle of rotation of the rotatable member in which the antiskid elements are thrown backwards. On the other hand, the antiskid elements should not touch the ground during that part of the cycle of rotation in which they are thrown forwards. Moreover, the antiskid-element-carrying, rotatable member must rotate at a distance from the ground. These three main conditions of the antiskid device usually lead to the rotating member being placed in the working position so as to be inclined slightly downwards/outwards.

When using such an antiskid device, it is also important that the rotatable member provided with the antiskid elements engages with the vehicle wheel exactly in the correct position. If the rotatable member is a roller, this should, in operation, rotate against the side of the tyre. In other antiskid devices, in which the antiskid elements are supported by fingers belonging to the rotatable member, this should, in operation, rotate in connection with the contact surface of the tyre and the ground. For these two different rotatable antiskid-element-carrying members, it has been found that the angle at which the member rotates in connection with the vehicle wheel relative to the plane of rotation of the vehicle wheel is decisive of the antiskid effect that can be achieved.

Antiskid devices of the types, to which the invention relates, are usually mounted at the rear axle of heavy vehicles. In such vehicles, there are great differences in the appearance of the design of the mounting position and the area of the rear axle. Therefore, the antiskid device must be adapted to each vehicle model. Further, the design and position of the rear axle have great tolerances in such vehicles.

Prior art antiskid devices are, for reasons of strength, made of relatively thick materials which are bent and welded. Such materials and methods of manufacture make it difficult to achieve sufficient accuracy in respect of e.g. the setting angles. For these reasons, it is necessary to set the exactly correct height and angle between the rotatable member and the vehicle wheel in each individual mounting.

DE-A-4,022,907 discloses an antiskid device according to the preamble of claim 1, in which the adjustment of the relationship between the rotatable member or roller and the vehicle wheel in respect of height and angle is carried out by means of a ball-and-socket joint. The roller is mounted on a threaded bolt, whose threaded portion is enclosed by the ball-and-socket joint. The thread of the bolt permits vertical adjustment of the roller while the ball-and-socket joint permits adjustment of the angle of the roller relative to the vehicle wheel.

This prior art device has many degrees of freedom and thus suffers from the drawback that the adjustment that has been made in mounting is difficult to maintain. Above all, the angular adjustment of the ball-and-socket joint is sensitive to the jerks and tensile forces to which the roller is subjected when being taken into operation and during operation. The device is comparatively complicated and consists of a plurality of components, which renders it expensive. Particularly the ball-and-socket-joint construction accumulates dirt, which is a great problem in the dirty, salt and moist environment which slippery winter roads constitute. This makes it rust easily, which may cause jamming and which impairs the function and makes it difficult to make exact fine adjustments later on.

In a preferred embodiment of the above-mentioned device, the ball of the ball-and-socket joint is made of plastic. The plastic material is deformed when, during mounting, the ball-and-socket joint is tensioned. This embodiment of the ball-and-socket joint certainly results in higher resistance to rust and angular changes, but since the ball is deformed during mounting, it will then be difficult to use if, for instance, after a change of tyre or a repair, the pre-set angle must be changed. It is also a complicated operation to set the suitable angular position of the ball-and-socket joint, since the assembler must hold the roller steady in the desired position by one hand and simultaneously tighten a number of bolts by the other hand.

In a well-tried solution of the construction of antiskid devices, the vertical adjustment of the rotatable member is carried out by means of distance members positioned around a spindle on which said member is mounted. This construction has been found to allow a simple method for vertical adjustment and is less sensitive both to rust and mechanical influence as compared with the antiskid devices whose functions of vertical adjustment are based on a thread. However, there is today no antiskid device having such a construction of the vertical adjustment that permits adjustment of different angular positions of the rotatable member.

### Objects of the Invention

The object of the present invention is to provide an antiskid device which obviates the above-mentioned drawbacks and enables simple adjustment of the angular position of the rotatable, antiskid-element-carrying member relative to the vehicle wheel.

A further object of the invention is to provide an adjusting possibility having little sensitivity to tensile forces and jerks, thereby preventing a pre-set angular position from being changed during actuation and during operation.

A still further object of the invention is to provide an antiskid device, in which it is easy to change a pre-set angle α very large number of times while maintaining the function of angular adjustment.

A special object of the invention is that it should be possible to apply the function of angular adjustment to antiskid devices in which the vertical adjustment of the rotatable member is carried out by means of distance members.

It is also an object of the invention to provide an adjusting device which is easy to manufacture and is formed of simple standard components.

One more object of the invention is that the function of angular adjustment should have the same good function, independently of the direction in which the arm, on which the rotatable member is mounted, extends in the working position.

### Summary of the Invention

According to the invention, these and other objects, which will be apparent from the description below, are achieved by means of an antiskid device which is of the type described by way of introduction and which, in addition, has the features stated in the characterising clause of the accompanying claims 1 and 12. Preferred embodiments of the invention are defined in the subordinated claims.

In one aspect of the invention, an antiskid device for vehicles is provided, which comprises an actuatable arm, a rigid spindle attached to the arm, and a rotatable, antiskid-element-carrying roller which is mounted on the spindle. The roller can be set in different angular positions and should, in a working position, rotate in connection with a vehicle wheel. The spindle is turnable about an axis extending through the arm and is provided with a locking means. The axis of spindle turning extending through the arm and the axis of rotation of the roller make a constant angle. The turning of the spindle about the axis is connected to the adjustment of the angular position of the roller.

In another aspect of the invention, an antiskid device for vehicles is provided, in which the spindle comprises two portions, the first portion having, in the area of the attachment to the arm, an extent which essentially coincides with the predetermined axis, about which the spindle is turnable. The other portion has an extent which essentially coincides with the axis of rotation of the rotatable member.

By means of an antiskid device of the invention, whose angular adjustment has few degrees of freedom, a more reliable adjustment is achieved. Moreover, the angular adjustment is necessarily connected to a turning motion, whereby a set angular position is maintained in spite of jerks and tensile forces. This means that no force affecting the rotatable member can change the set angular position by a rectilinear motion only. The rotatable member can be moved out of its position by a turning motion only.

The connection between turning and angular position also confers the advantage that the adjustment of the angular position will be extremely simple. Consequently, the assembler does not have to hold the rotatable member steady when setting a new angle. The assembler may, after having set the desired angular position, let go of the rotatable member and his hands are free to lock this position.

No part of the device need be deformed for locking the set angular position, which makes it possible to change the angular position a countless number of times while maintaining the function.

The possibilities of adjustment according to the invention are achieved by means of standard components and may advantageously be applied to antiskid devices, in which the vertical adjustment is carried out by means of distance washers, the antiskiddevice requiring no great space. These properties are important to allow mounting of the inventive antiskid device on small vehicles.

A great advantage is that the adjusting device according to the invention can be mounted on existing antiskid devices, as well as on newly manufactured ones.

The angular position of the rotatable member has the same possibilities of adjustment independently of the direction in which the arm, on which the member is mounted, extends in the working position.

### Brief Description of the Drawings

The invention will now be described in more detail with reference to the accompanying drawings which illustrate some non-restrictive embodiments.

Fig. 1 shows an example of a prior art antiskid device of the type to which the invention is applicable.

Fig. 2 is a schematic view of a rotatable member belonging to a device according to the invention.

Figs 3-4 are two different side views of the rotatable member in different angular settings.

Figs 5-6 are two different side views of the rotatable member in different angular settings according to Figs 3-4, the vertical setting being different.

Figs 7 and 8 are side views, on a larger scale, of details of two preferred spindle attachments belonging to the device.

### Description of Embodiments of the Invention

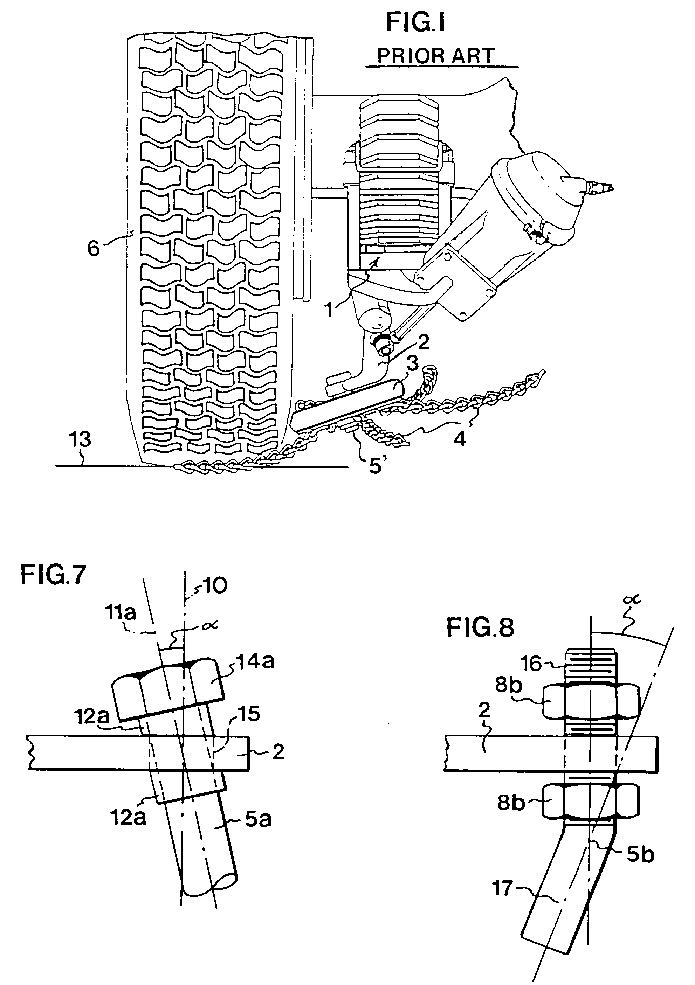

Fig. 1 illustrates a prior art antiskid device for vehicles in its working position. The device comprises a holder 1 which is adapted to be mounted at the rear axle of the vehicle and which has an arm 2, which is hingedly connected to the holder 1 and is actuatable between a working position and a resting position. On the arm 2, a rotatable member is mounted, here in the form of a roller 3, fitted with antiskid elements, here in the form of pieces of chain 4. The roller 3 is rotatably mounted on a spindle 5' which is attached to the arm 2. In the working position of the antiskid device, the roller 3 engages the side of a vehicle wheel 6 (the side of the tyre) and is thus caused to rotate. This implies that the pieces of chain 4 are thrown outwards by centrifugal force and in between the vehicle wheel 6 and the ground 13, thus producing the desired friction.

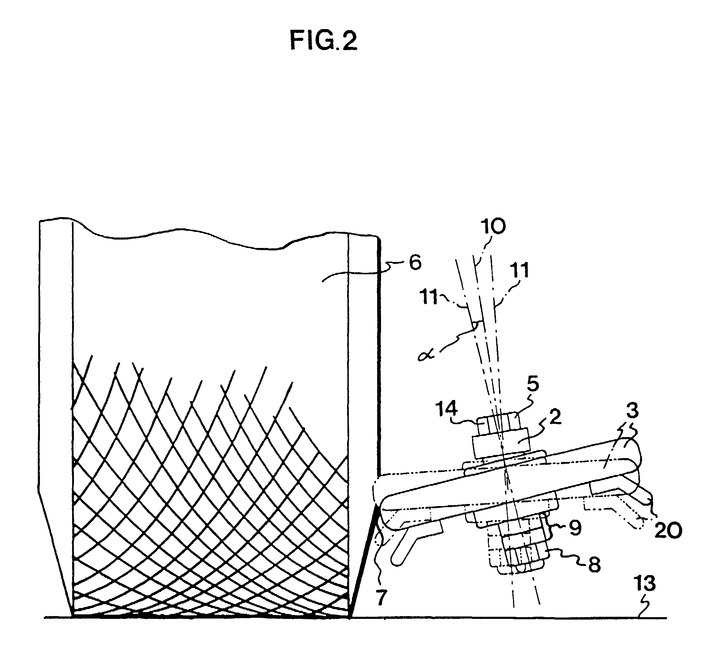

Fig. 2 illustrates a device according to the invention, in which a corresponding roller 3 engages the side of the vehicle wheel 6 at its inner side 7. For the sake of clarity, a plurality of components have been omitted in the Figure. The roller 3 is mounted on the spindle 5, which here is specially designed, and rotatable about an axis of rotation 11. In prior art manner, the roller 3 comprises a number of mountings 20, to which antiskid elements, for instance pieces of chain, are to be attached as shown in Fig. 1. The spindle 5 is rigid and, at its attachment to the arm 2, turnable about a predetermined axis 10. In a certain position as set, the spindle 5 is locked by locking means which will be described in more detail below. A constant angle α forms between the axis 10 and the axis of rotation 11 of the roller 3. When the spindle 5 is turned for new adjustment, the axis of rotation 11 of the roller 3 will be turned about the axis 10. The angular position of the roller 3 in relation to the side of the wheel 6 will then be changed. The range, in which the angular position can be set, is dependent on the size of the constant angle α. The size of the angle α is selected according to the range one wants to cover and the desired accuracy of the adjustment. The intended possibility of adjustment is achieved in the range of 3-20° for the constant angle α. Practical experiments have given excellent results in the angular range 5-10°, and it has been found that a particularly suitable value of the angle α is about 5°, which means that the roller 3 can be set in the range ± 5° (10° deviation).

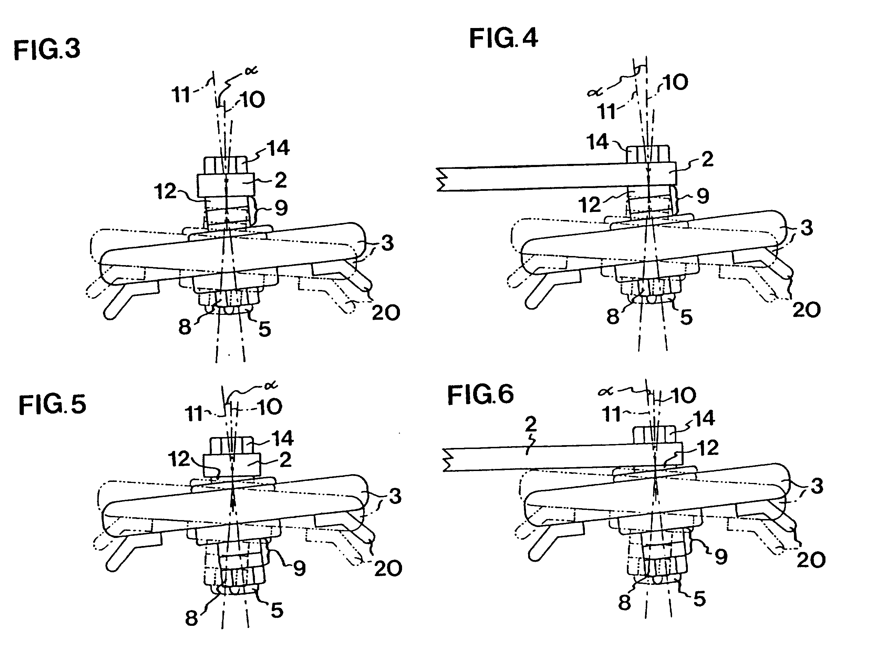

The spindle 5 is provided with a distance member generally designated 9 and comprising a number of distance washers, and a clamping means in the form of a nut 8 on a thread. Moreover, the spindle 5 comprises an abutment in the form of a head 14. When the nut 8 is tightened, the spindle will be locked in position. By the distance means 9, the roller is held at a predetermined distance from the arm 2. The distance washers can be positioned on an optional side of the roller 3 and, thus, determine the vertical adjustment thereof (see Figs 3-4 and 5-6, respectively).

In Fig. 3, the roller 3 is shown separately, and it is apparent how the angular position of the roller 3 can be adjusted according to the invention. The constant angle α forms by the spindle 5 being slightly angled at its attachment to the arm 2. The spindle 5 is also provided with a number of distance washers 9, the one 12 closest to the arm 2 being bevelled. The angle which forms between the opposite abutment surfaces of the distance washer 12 is equal to said constant angle α. The distance washer 12 thus has a surface which is perpendicular to the axis of rotation 11 of the roller 3 and which constitutes a stable abutment surface for the remaining distance washers. The distance washer 12 need not necessarily be bevelled, but can be made of a flexible material which is slightly deformed into an oblique shape when compressed (not shown). It may then have about the same function as if it were bevelled. If an angular spindle 5 is used, the desired adjustment can be achieved (for small angles α) without any bevelled distance washer 12, or with a distance washer which does not have the exact angle α between its opposite surfaces. To achieve a good function, i.e. simple handling and stable locking, it is however preferred that the distance washer 12 in operation has the angle α between its abutment surfaces.

One extreme angular position of the roller 3 is indicated by full lines, whereas the other extreme angular position of the roller 3 is indicated by dash-dot lines. The roller 3 is shown in Figs 3-4 in a lower vertical adjustment position in which all the distance washers are placed between the roller 3 and the arm 2, which here is located above the roller 3.

Fig. 4 is a different side view, perpendicular to the one in Fig. 3, of the roller 3 and its attachment to the arm 2. However, the roller 3 is shown in two angular positions which differ from the one in Fig. 3. It is apparent that the roller 3, when being turned, will occupy different angular positions relative to the arm 2. It is thus not necessary that the arm 2 extends in a certain direction in relation to the vehicle wheel or the direction of travel of the vehicle. All angular adjustments within the range 2α can be provided independently of whether the arm 2 in the working position extends in the direction of travel of the vehicle, at right angles to this or in any direction therebetween. As a result, the inventive antiskid device can be mounted in different ways and on different vehicles without affecting the function of angular adjustment.

Figs 5 and 6 differ from Figs 3 and 4 merely by the roller 3 being in its upper position of vertical adjustment (cf. Fig. 2) owing to the condition that all the distance washers, except the bevelled distance washer 12, are arranged below the roller 3.

Fig. 7 shows a further embodiment of the spindle and its attachment. The possibilities of angular adjustment are in this case brought about by a straight spindle 5a, fitted with a head 14a, being turnable and inclined in a hole 15 in the arm 2. Since the hole 15 is of a diameter which is greater than the diameter of the spindle 5a and since the spindle 5a has two bevelled distance elements, here in the form of distance washers 12a, a constant angle α forms between the centre axis 11a of the spindle 5a, which at the same time is the axis of rotation of a rotatable member, and the axis 10 about which the spindle 5a, together with the distance washers 12a, can be turned. By a clamping member (not shown), together with a plurality of distance members and a rotatable member, clamping the spindle 5a, the angular adjustment can be locked. The diameter of the hole 15 need not be constant throughout, but the hole can advantageously also be conical.

A different, similar technique of providing a possibility of angular adjustment according to the invention (not shown) is to arrange a circular sleeve, which has an angle between the centre axis of its outer diameter and the centre axis of its inner diameter, turnable in a hole in the arm. A straight spindle is arranged in the hole of the sleeve and a constant angle according to the invention forms between the centre axis and the axis about which the spindle, together with the sleeve, can be turned.

Fig. 8 shows a further example how to bring about a possibility of angular adjustment according to the invention. An angled spindle 5b has a threaded portion 16 extending through a hole in the arm 2. On both sides of the arm 2, a nut 8b is screwed onto the thread. When the nuts 8b are moved apart, as shown in Fig. 8, the spindle 5b can be turned at its attachment to the arm 2. When the spindle 5b is clamped to the arm 2 by means of the nuts 8b, the set angular position is locked for that portion 17 of the spindle 5b which extends obliquely away from the arm 2 and on which the rotatable member is to be mounted. One of the nuts 8b could, of course, be replaced by a fixed abutment on the spindle 5b, or by the hole in the arm 2 being threaded.

Finally, it should be emphasised that the invention is in no way restricted to the embodiments which have been described above, but several modifications are feasible within the scope of the inventive idea as expressed in the accompanying claims. It should also be pointed out that the concept of the invention is just as applicable to devices having a roller in rolling engagement with the side of the tyre (for instance CA-A-1,138,314 and DE-A-4,022,907) as to devices without such a roller (for instance SE-B-446,539), in which the rotatable member is flexible and in which the antiskid elements are attached to projecting radial fingers.

## Claims

1. An antiskid device for vehicles, comprising a holder (1) to be mounted in connection with a vehicle wheel (6), an arm (2) which is hingedly connected to the holder and which is actuatable between a working position for antiskid effect and a non-operative resting position; a spindle (5; 5a; 5b) attached to the arm (2); and a member (3) which is rotatably mounted on the spindle (5; 5a; 5b) and which carries at least one antiskid element (4) which in the working position is arranged to be thrown, by centrifugal force, in between the vehicle wheel (6) and the ground (13), the angular position of the rotatable member (3) being adjustable relative to the side of the vehicle wheel (6), **characterised** in that the spindle (5; 5a; 5b) is rigid and, at its attachment to the arm (2), is turnable about a predetermined axis (10) making a constant angle (α) with the axis of rotation (11; 11a) of the rotatable member (3) for adjusting the angular position of the rotatable member (3) relative to the side of the vehicle wheel (6), and that the spindle (5; 5a; 5b) has means (8, 9, 14) for locking thereof in different turning positions.

2. The antiskid device as claimed in claim 1, **characterised** in that said constant angle (α) is in the approximate range of 3-20°.

3. The antiskid device as claimed in claim 2, **characterised** in that the range of said angle is 5-10°.

4. The antiskid device as claimed in any one of claims 1-3, **characterised** in that said means for locking comprises a clamping member (8) and an abutment (14) which belong to the spindle (5; 5a; 5b) and are positioned on each side of the arm (2).

5. The antiskid device as claimed in any one of claims 1-4, **characterised** in that the spindle (5; 5b) comprises two portions (16, 17) the first portion (16) having, in the area of its attachment to the arm (2), an extent which essentially coincides with said predetermined axis (10), about which the spindle (5; 5b) is turnable, while the other portion (17) has an extent which essentially coincides with the axis of rotation (11; 11a) of the rotatable member.

6. The antiskid device as claimed in any one of claims 1-5, **characterised** in that the spindle (5; 5a; 5b), at its attachment to the arm (2), is provided with at least one distance member (9) arranged around the spindle (5; 5a; 5b) and adapted to hold the rotatable member (3) at a predetermined distance from the arm (2).

7. The antiskid device as claimed in claim 6, **characterised** in that the distance member (9) comprises an annular element (12; 12a) which is arranged between the arm (2) and the rotatable member (3) and which has a first surface which is perpendicular to the axis (10) of the spindle and a second surface making an angle with the first surface, said angle equalling said constant angle (α).

8. The antiskid device as claimed in claim 6 or 7, **characterised** in that the spindle (5a) extends through a hole (15) in the arm (2), and that portion of said spindle (5a) which is positioned in said hole (15) has a diameter which is smaller than the diameter of said hole (15), the spindle (5a) being located such that its centre axis (11a), in the area of said attachment, makes an angle with the centre axis (10) of the hole, said angle equalling said constant angle (α).

9. The antiskid device as claimed in any one of claims 1-8, **characterised** in that the rotatable member (3) is a roller which in the working position frictionally engages the side of the vehicle wheel (6).

10. The antiskid device as claimed in any one of claims 1-8, **characterised** in that the rotatable member is flexible and has projecting portions at whose outer ends said antiskid elements are attached.

11. The antiskid device as claimed in any one of the preceding claims, **characterised** in that said antiskid elements (4) consist of chains.

12. A wheel-mounted vehicle, **characterised** in that it is provided with an antiskid device as claimed in any one of claims 1-11.

## Patentansprüche

1. Gleitschutzvorrichtung für Fahrzeuge, umfassend eine in Zusammenhang mit einem Fahrzeugrad (6) zu montierende Halterung (1), einen mit der Halterung schwenkbar verbundenen Arm (2), der zwischen einer Arbeitsposition zur Erzielung einer Gleitschutzwirkung und einer nicht wirksamen Ruheposition betätigbar ist; eine am Arm (2) befestigte Spindel (5; 5a; 5b); und ein drehbar an der Spindel (5; 5a; 5b) montiertes und mindestens ein Gleitschutzelement (4) tragendes Element (3), das in der Arbeitsposition so angeordnet ist, daß es durch Zentrifugalkraft zwischen das Fahrzeugrad (6) und den Erdboden (13) geschleudert wird, wobei die Winkelposition des drehbaren Elements (3) im Verhältnis zur Seite des Fahrzeugrades (6) einstellbar ist, dadurch gekennzeichnet, daß die Spindel (5; 5a; 5b) starr und an ihrer Befestigung am Arm (2) um eine vorbestimmte Achse (10) drehbar ist, um einen konstanten Winkel (α) zur Drehachse (11; 11a) des drehbaren Elements (3) herzustellen, so daß die Winkelposition des drehbaren Elements (3) im Verhältnis zur Seite des Fahrzeugrades (6) eingestellt werden kann, und daß die Spindel (5; 5a; 5b) Mittel (8, 9, 14) für deren Verriegelung in unterschiedlichen Drehpositionen umfaßt.

2. Gleitschutzvorrichtung nach Anspruch 1, dadurch gekennzeichnet, daß der konstante Winkel (α) ungefähr in einem Bereich von 3 bis 20° liegt.

3. Gleitschutzvorrichtung nach Anspruch 2, dadurch gekennzeichnet, daß der Winkel in einem Bereich von 5 bis 10° liegt.

4. Gleitschutzvorrichtung nach einem der Ansprüche 1 bis 3, dadurch gekennzeichnet, daß das Verriegelungsmittel ein zur Spindel (5; 5a; 5b) gehörendes Klemmelement (8) und Widerlager (14) umfaßt, die auf jeder Seite des Arms (2) positioniert sind.

5. Gleitschutzvorrichtung nach einem der Ansprüche 1 bis 4, dadurch gekennzeichnet, daß die Spindel (5; 5b) zwei Abschnitte (16, 17) umfaßt, wobei der erste Abschnitt (16) im Bereich seiner Befestigung am Arm (2) so bemessen ist, daß er im wesentlichen mit der vorbestimmten Achse (10), um die die Spindel (5; 5b) drehbar ist, übereinstimmt, während der andere Abschnitt (17) so bemessen ist, daß er im wesentlichen mit der Drehachse (11; 11a) des drehbaren Elements übereinstimmt.

6. Gleitschutzvorrichtung nach einem der Ansprüche 1 bis 5, dadurch gekennzeichnet, daß die Spindel (5; 5a; 5b) an ihrer Befestigung am Arm (2) mindestens ein um die Spindel (5; 5a; 5b) herum angeordnetes Distanzelement (9) aufweist, das so ausgeführt ist, daß es das drehbare Element (3) in einem vorbestimmten Abstand vom Arm (2) hält.

7. Gleitschutzvorrichtung nach Anspruch 6, dadurch gekennzeichnet, daß das Distanzelement (9) ein ringförmiges Element (12; 12a) umfaßt, das zwischen dem Arm (2) und dem drehbaren Element (3) angeordnet ist und eine senkrecht zur Achse (10) der Spindel verlaufende erste Oberfläche und eine in einem Winkel zur ersten Oberfläche verlaufende zweite Oberfläche aufweist, wobei dieser Winkel dem konstanten Winkel (α) entspricht.

8. Gleitschutzvorrichtung nach Anspruch 6 oder 7, dadurch gekennzeichnet, daß die Spindel (5a) durch ein Loch (15) im Arm (2) verläuft, und daß der Abschnitt der im Loch (15) positionierten Spindel (5a) einen Durchmesser aufweist, der kleiner als der Durchmesser des Loches (15) ist, wobei die Spindel (5a) so angeordnet ist, daß ihre Mittelachse (11a) im Bereich der Befestigung in einem Winkel zur Mittelachse (10) des Loches verläuft, wobei dieser Winkel dem konstanten Winkel (α) entspricht.

9. Gleitschutzvorrichtung nach einem der Ansprüche 1 bis 8, dadurch gekennzeichnet, daß es sich bei dem drehbaren Element (3) um eine Rolle handelt, die in der Arbeitsposition in Reibungseingriff mit der Seite des Fahrzeugrades (6) kommt.

10. Gleitschutzvorrichtung nach einem der Ansprüche 1 bis 8, dadurch gekennzeichnet, daß das drehbare Element flexibel ist und vorspringende Abschnitte aufweist, an deren äußeren Enden die Gleitschutzelemente befestigt sind.

11. Gleitschutzvorrichtung nach einem der vorstehenden Ansprüche, dadurch gekennzeichnet, daß die Gleitschutzelemente (4) aus Ketten bestehen.

12. Räderfahrzeug, dadurch gekennzeichnet, daß es mit einer Gleitschutzvorrichtung nach einem der Ansprüche 1 bis 11 ausgestattet ist.

## Revendications

1. Dispositif d'antipatinage pour des véhicules, comprenant un dispositif de support (1) à monter en liaison avec une roue de véhicule (6), un bras (2) qui est relié en articulation au dispositif de support et qui peut être entraîné entre une position de travail pour fournir un effet d'antipatinage et une position de repos inopérante; une broche (5; 5a; 5b) fixée au bras (2); ainsi qu'un élément (3) qui est monté en rotation sur la broche (5; 5a; 5b) et qui porte au moins un élément d'antipatinage (4) qui, dans la position de travail, est arrangé pour être actionné par une force centrifuge entre la roue de véhicule (6) et le sol (13), la position angulaire de l'élément rotatif (3) étant réglable par rapport au côté de la roue de véhicule (6), caractérisé en ce que la broche (5; 5a; 5b) est rigide et, à sa fixation au bras (2), est rotative autour d'un axe (10) prédéterminé formant un angle constant (α) avec l'axe de rotation (11; 11a) de l'élément rotatif (3) dans le but de régler la position angulaire de l'élément rotatif (3) par rapport au côté de la roue de véhicule (6), et en ce que la broche (5; 5a; 5b) possède des moyens (8, 9, 14) qui lui permettent d'être verrouillée dans différentes positions de rotation.

2. Dispositif d'antipatinage selon la revendication 1, caractérisé en ce que ledit angle constant (α) se situe dans le domaine approximatif de 3 à 20°.

3. Dispositif d'antipatinage selon la revendication 2, caractérisé en ce que le domaine dudit angle s'élève de 5 à 10°.

4. Dispositif d'antipatinage selon l'une quelconque des revendications 1 à 3, caractérisé en ce que lesdits moyens de verrouillage comprennent un élément de serrage (8) et une butée (14) qui font partie de la broche (5; 5a; 5b) et qui sont positionnés de part et d'autre du bras (2).

5. Dispositif d'antipatinage selon l'une quelconque des revendications 1 à 4, caractérisé en ce que la broche (5; 5b) comprend deux portions (16, 17), la première portion (16) possédant, dans la zone de sa fixation au bras (2), une étendue qui coïncide essentiellement avec celle dudit axe prédéterminé (10) autour duquel la broche (5; 5b) est à même d'effectuer des rotations, tandis que l'autre portion (17) possède une étendue qui coïncide essentiellement avec celle de l'axe de rotation (11; 11a) de l'élément rotatif.

6. Dispositif d'antipatinage selon l'une quelconque des revendications 1 à 5, caractérisé en ce que la broche (5; 5a; 5b), à sa fixation au bras (2), est munie d'au moins un élément d'écartement (9) arrangé autour de la broche (5; 5a; 5b) et conçu pour maintenir l'élément rotatif (3) à une distance prédéterminée par rapport au bras (2).

7. Dispositif d'antipatinage selon la revendication 6, caractérisé en ce que l'élément d'écartement (9) comprend un élément annulaire (12; 12a) qui est arrangé entre le bras (2) et l'élément rotatif (3) et qui possède une première surface qui est perpendiculaire à l'axe (10) de la broche et une seconde surface formant un angle avec la première surface, ledit angle étant égal audit angle constant (α).

8. Dispositif d'antipatinage selon la revendication 6 ou 7, caractérisé en ce que la broche (5a) s'étend à travers un trou (15) pratiqué dans le bras (2), la portion de ladite broche (5a) qui est disposée dans ledit trou (15) possédant un diamètre qui est inférieur au diamètre dudit trou (15), la broche (5a) étant disposée de telle sorte que son axe central (11a), dans la zone de ladite fixation, forme un angle avec l'axe central (10) du trou, ledit angle étant égal audit angle constant (α).

9. Dispositif d'antipatinage selon l'une quelconque des revendications 1 à 8, caractérisé en ce que l'élément rotatif (3) est un galet qui, dans la position de travail, entre en contact par friction avec un côté de la roue de véhicule (6).

10. Dispositif d'antipatinage selon l'une quelconque des revendications 1 à 8, caractérisé en ce que l'élément rotatif est flexible et possède des portions saillantes aux extrémités externes desquelles sont fixés lesdits éléments d'antipatinage.

11. Dispositif d'antipatinage selon l'une quelconque des revendications précédentes, caractérisé en ce que lesdits éléments d'antipatinage (4) sont constitués par des chaînes.

12. Véhicule monté sur roues, caractérisé en ce qu'il est muni d'un dispositif d'antipatinage selon l'une quelconque des revendications 1 à 11.
